# EUROPÄISCHE PATENTSCHRIFT

(11) **EP 0 345 669 B1**
(45) Veröffentlichungstag und Bekanntmachung des Hinweises auf die Patenterteilung: **22.02.1995**
(21) Anmeldenummer: 89110058.8
(22) Anmeldetag: 02.06.1989
(51) Int. Cl.: C02F 3/12

(54) **Verfahren und Vorrichtung zur biologischen Aktivierungsreinigung von Abwasser**
Process and device for activated biological waste water treatment
Procédé et dispositif pour l'épuration de l'eau usée par activation biologique

(30) Priorität: 02.06.1988 CS 3802/88
(43) Veröffentlichungstag der Anmeldung: 13.12.1989
(73) Patentinhaber: INCOTEX statni podnik ekonomickoorganizacni ustav, Brno (CZ)
(72) Erfinder: Mackrle, Svatopluk, Dr.-Ing., Brno (CS); Mackrle, Vadimir, Dr.-Ing., Bratislava (CS)
(74) Vertreter: Beetz & Partner Patentanwälte

(56) Entgegenhaltungen:
- FR-A- 2 322 834
- FR-A- 2 378 721
- GB-A- 2 034 683
- US-A- 4 405 456

## Beschreibung

Die Erfindung betrifft ein Verfahren sowie eine Vorrichtung zur biologischen Aktivierungsreinigung von Wasser, insbesondere nach dem Belebtschlammverfahren, mit Fluidfiltration und selbsttätiger Rückführung des aktivierten Schlamms vom Fluidfilter zurück in den Aktivierungsprozeß.

Einem breiteren Einsatz der fortschrittlichen biologischen Abwasserreinigung stehen bislang einige Betriebsschwierigkeiten im Wege, insbesondere bei kleinen und kleinsten Anlagen, ferner die etwas verringerte Effektivität bei der Reinigung von stickstoffhaltigen Abwässern welche zusätzlich eine Nitrifikation und Denitrifikation erfordern. Darüber hinaus besteht ein steigendes Bedürfnis daran, den Reinigungsprozeß bei bestehenden Anlagen mit Fluidfiltration zu intensivieren.

Betriebsschwierigkeiten machen sich z.B. bei Reaktoren mit Fluidfiltration in der Form von geschlossenen zylindrischen Behältern bemerkbar. Diese Reaktortypen eignen sich beispielsweise zur Reinigung von lokal anfallendem Abwasser, wie etwa Spülwasser. Spezielle Anforderungen ergeben sich hierbei zum Teil aus der Forderung nach automatisiertem Betrieb sowie hoher Zuverlässigkeit, zum Teil aus hohen Anforderungen bezüglich einer problemlosen Eingliederung einer derartigen Einrichtung in eine ökologisch anspruchsvolle Umweltumgebung, z.B. bei Erholungszentren und dergleichen.

Weitere spezielle Forderungen bestehen darin, auch bei kleinen Anlagen so wirtschaftlich arbeiten zu können, daß mit dem Betrieb in größeren Anlagen vergleichbare Kosten resultieren.

Sämtliche bisher bekannten Reaktoren mit Fluidfiltration sind darüber hinaus mit bisher nicht vermeidbaren Nachteilen verbunden. Die bisher erzielten hydraulischen Verhältnisse bei der Fluidfiltration schließen bei kleinen Anlagen eine Verstopfung des Eintrittsspalts in den Raum der Fluidfiltration bzw. den Separationsraum und dessen anschließende Verschlammung nicht aus. Diese Anfälligkeit für eine Verschlammung des Separationsraums ist bei herkömmlichen Fluidfiltrationsverfahren und entsprechenden Anlagentypen um so größer, je kleiner die Kapazität der jeweiligen Anlage ist. Bei Anlagen mit Fluidfiltration, bei denen der Separationsraum zugänglich ist, kann eine derartige Betriebsstörung schnell und einfach beseitigt werden, und zwar auch ohne Betriebsunterbrechung. Bei Reaktoren mit zylindrischem Behälter ist dies allerdings schwieriger, wobei eine Abschaltung der Anlage dann erforderlich ist.

Bei z.B. aus der FR-A-2 322 834 bekannten zylindrischen Reaktoren mit einem Separationsraum, der den Innenraum des Behälters in zwei Aktivierungsräume unterteilt, tritt der weitere Nachteil auf, daß sich im unteren Teil des Aktivierungsraums, unter dem Separationsraum tote Gebiete in der Strömung entwickeln, in denen sich der Belebtschlamm absetzt. Insbesondere nach Betriebsunterbrechungen kann der abgelagerte Schlamm beim wiederanfahren durch das strömende Aktivierungsgemisch nicht mehr in die Schwebe gebracht werden. Dieser abgesetzte Schlamm beginnt unter anaeroben Bedingungen zu faulen und verursacht nicht nur weitere Betriebsstörungen, sondern führt auch zu einer Verringerung der Reinigungseffektivität der Anlagen. Die Erzielung einer ausreichen den Strömung auch in derartigen Totzonen erfordert ein aufwendiges System von Leitelementen sowie einen erhöhten Energieverbrauch zu einer vollkommenen Suspendierung des Belebtschlamms. Dies führt wiederum zu erhöhten Investitions- und Betriebskosten.

Ein weiterer Nachteil von Abwasserreinigungsanlagen mit zylindrischen Reaktoren zur biologischen Abwasserreinigung liegt in ihrer begrenzten Leistung. Diesem Nachteil kann bisher nur durch große Beckenabmessungen oder Begrenzung auf Kleinstanlagen abgeholfen werden.

Neben diesen spezifischen Nachteilen zylindrischer Reaktoren weisen sämtliche Kleinanlagen den gemeinsamen Nachteil auf, daß bei ihnen höhere spezifische Betriebskosten bei der Abwasserreinigung anfallen, die ein Mehrfaches der Reinigungskosten bei größeren und großen Anlagen betragen, und zwar sowohl bezogen auf die spezifischen Investitionskosten als auch auf die Betriebskosten.

Bei den Betriebskosten ist bei kleinen Anlagen der Anteil entscheidend, der auf Lohnkosten für Bedienung und Wartung entfällt und übermäßig hoch ist. Daher sind auch bei kleinen Reinigungsanlagen die volle Automatisierung und gleichzeitig auch eine hohe Betriebszuverlässigkeit sehr wichtige Faktoren, die bei den bisher verfügbaren Typen zylindrischer Reaktoren mit Fluidfiltration bisher nicht in zufriedenstellender Weise gewährleistet werden können.

Bei einer weiteren bekannten Reinigungs vorrichtung gemäß FR 2 378 721 leigt eine Ursache für eine begrenzte Effektivität der Fluidfiltration bei der Abwasserreinigung in der verringerten Separationskapazität bei höheren Werten des Schlammindex, d.h. bei der Bildung eines leichten Belebtschlamms. Eine Tendenz zur Bildung von Belebtschlämmen dieses Typs liegt bei vielen Abwassertypen und Reinigungsanlagen mit zusätzlicher Denitrifikation vor. Da die Verringerung der Separationskapazität exponentiell vom Schlammindex abhängt, führt auch bereits eine kleine Erhöhung des Wertes des Schlammindex zu einer ausgeprägten Verringerung der Anlagenkapazität.

Die Erhöhung der Separationskapazität stellt daher eine Möglichkeit zur Intensivierung des Reinigungsprozesses dar, die bei bekannten Anlagen mit Fluidfiltration bisher allerdings nicht zufriedenstellend realisiert werden konnte.

Ein erhebliches Problem bei Abwasserreinigungsanlagen mit Fluidfiltration liegt ferner auch in der sogenannten Post-Denitrifikation in der Schicht des Fluidfilters infolge mangelnden Sauerstoffeintrags in diese Schicht. Im sauerstoffarmen Milieu des Fluidfilters kommt es zu einem Post-Denitrifikationsphänomen, wobei ein Teil der restlichen Nitrate durch Denitrifikationsprozesse zu gasförmigem Stickstoff reduziert wird, der eine Schlammflotation verursacht und dessen Beseitigung kompliziert ist und des öfteren auch zu einer Verschlechterung der Qualität des gereinigten Wassers führt.

Der Erfindung liegt die Aufgabe zugrunde, unter Vermeidung oder Beseitigung der oben erläuterten Nachteile des Stands der Technik ein Verfahren und eine Vorrichtung zur biologischen Aktivierungsreinigung von Wasser anzugeben, die auch mit hoher Kapazität in wirtschaftlicher Weise angewandt werden können.

Diese Aufgabe wird durch die merkmale der Patentansprüche 1 (Verfahren) und 3 (Vorrichtung) gelöst.

Die abhängigen Ansprüche betreffen vorteilhafte Ausführungsformen der Erfindungskonzeption.

Das erfindungsgemäße verfahren wird im folgenden unter Bezug auf die Zeichnungen näher erläutert, in denen Ausführungsbeispiele erfindungsgemäßer Vorrichtungen dargestellt sind. Es zeigen:
- Fig. 1 und 2: Reinigungs-Vorrichtungen mit einem vertikalen zylindrischen Behälter;
- Fig. 3: eine Reinigungs-Vorrichtung mit einer Mammutpumpe zur Absaugung des rückkehrenden aktivierten Schlamms.

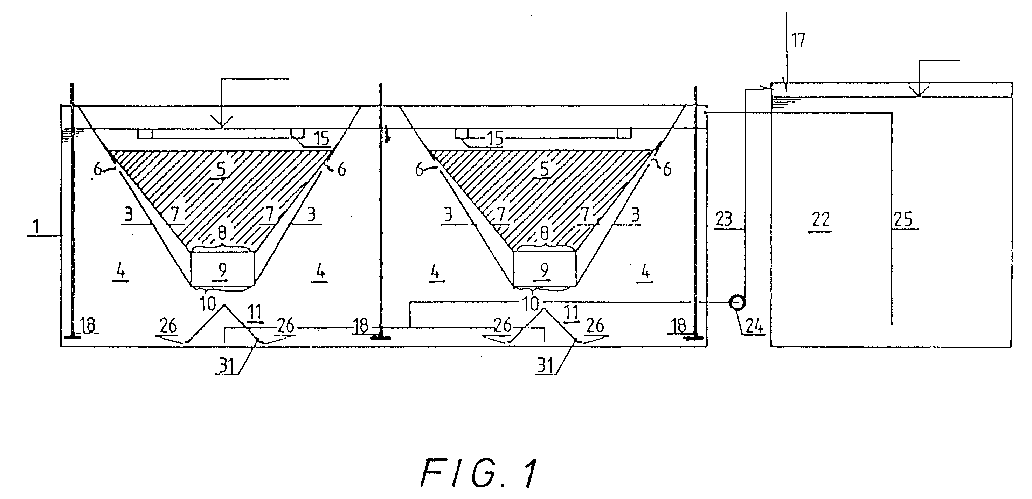

Bei der in Fig. 1 dargestellten Vorrichtung besitzt der Reaktor die Form eines vertikalen zylindrischen Behälters mit vertikaler Achse und einem Mantel 1, in dem mehrere Separationsräume 5 vorgesehen sind, die durch konisch angeordnete Trennwände 3 gebildet sind. Die Trennwände 3 besitzen Öffnungen 6, die innen von kegelförmig ausgebildeten Richtwänden 7 überdeckt sind, deren untere Ränder Eintrittsöffnungen 8 in das Fluidfilter im jeweiligen Separationsraum 5 bilden. Über Rückflußkanäle 9 mit je einer Austrittsöffnung 10 stehen die Separationsräume 5 mit Aktivierungsräumen 4 in Verbindung. Am Boden des Reaktors sind unter den Austrittsöffnungen 10 Sammelkegel 31 mit Öffnungen 26 angeordnet. Zwischen dem unteren Rand des Rückflußkanals 9 und dem Sammelkegel 31 ist jeweils ein Verbindungskanal 11 ausgebildet.

Die Sammelkegel 31 sind über eine Zirkulationsleitung 23 mit einem sauerstoffarmen Reduktionsraum des Aktivierungsprozesses verbunden, wobei in der Zirkulationsleitung 23 eine Pumpe 24 vorgesehen ist. In den Reduktionsraum 22 mündet ein Zufluß 17 für das Rohabwasser. Die Mündungen der Zirkulationsleitung 23 wie auch der Zufluß 17 des Rohabwassers sind im oberen Teil des Reduktionsraums tangential angeordnet. Eine Auslaßleitung 25 führt vom Boden des Reduktionsraums 22 zum Aktivierungsraum 4.

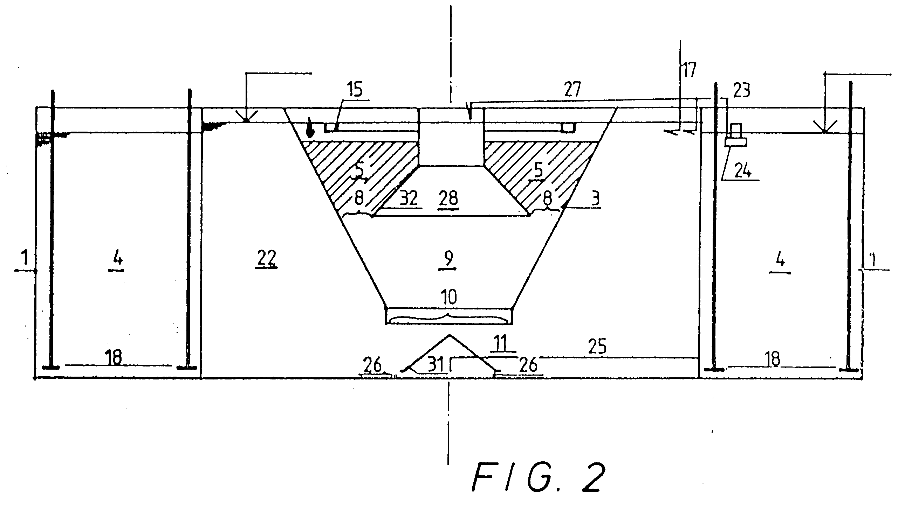

Die in Fig. 2 dargestellte erfindungsgemäße Vorrichtung weist in dem zylindrischen Behälter mit Mantel 1 und vertikaler Achse konzentrisch einen zylindrischen Reduktionsraum 22 auf. Der als Oxidationszone dienende Aktivierungsraum 4 ist mit einem aus den Belüftungselementen 18 bestehenden Belüftungssystem versehen. Der konische Separationsraum 5, der durch die Trennwand 3 gebildet wird, ist in dem Reduktionsraum 22 angeordnet. Der Separationsraum 5 hat über den Rückflußkanal 9 mit Austrittsöffnung 10 Verbindung mit dem Aktivierungsraum 4.

Unter der Austrittsöffnung 10 ist ein Sammelkegel 31 angeordnet, der über Auslaßleitung 25 mit dem Aktivierungsraum 4 verbunden ist. Der Aktivierungsraum 4 ist wiederum über die Zirkulationsleitung 23 und die Pumpe 24 mit dem Reduktionsraum 22 verbunden. Von der Zirkulationsleitung 23 führt eine Zweigleitung 27 zu einem Verteiterraum 28, dessen Mantel 32 gemeinsam mit der Trennwand 3 die spaltförmige Eintrittsöffnung 8 zum Fluidfilter bildet. Das gereinigte Wasser wird nach Durchgang durch das Fluidfilter über Rinnen 15 abgeführt.

Die in Fig. 2 dargestellte Vorrichtung arbeitet wie folgt:
Das Rohabwasser gelangt über den Zufluß 17 in den oberen Teil des Reduktionsraums 22, wo auch die Zirkulationsleitung 23 tangential einmündet, die mit der Pumpe 24 verbunden ist. Die Energie der beiden eintretenden Flüssigkeitsströme führt zu einer Kreiselbewegung, die ein Sedimentieren des aktivierten Schlamms in dieser Zone verhindert. Ein Teil des abgepumpten Aktivierungsgemischs aus dem Aktivierungsraum 4 fließt durch die Zweigleitung 27 in den Verteilerraum 28, der sich im Separationsraum 5 befindet. Im Verteilerraum 28 wird das Aktivierungsgemisch in den unteren Teil des Separationsraums 5 gelenkt und gelangt durch die Eintrittsöffnung 8 in das Fluidfilter im Separationsraum 5. Das gereinigte Wasser wird über din Rinnen 15 abgeführt. Die im Fluidfilter abgefangene Suspension des aktivierten Schlamms sinkt durch die Eintrittsöffnung 8 ab und gelangt über den Rückflußkanal 9, der mit der Austrittsöffnung 10 endet, unter gleichzeitiger Einwirkung des erwähnten Saugeffekts in die Oxidationszone des Aktivierungsraums 4 zurück, wodurch die Leistung dieses Reaktors wesentlich gesteigert wird.

Durch die von der Pumpe 24 hervorgerufene Zirkulation entsteht eine intensive Strömung zwischen dem Aktivierungsraum 4 und dem Reduktionsraum 22 des Aktivierungsprozesses und durch die Anordnung der Abnahme des Aktivierungsgemischs unter der Austrittsöffnung 10 vom Rückflußkanal 9 in Form des Sammelkegels 31 tritt ferner auch im Gebiet der Austrittsöffnung 10 eine intensive Strömung auf, die durch Absaugen des rückkehrenden verdichteten aktivierten Schlamms in das Aktivierungsgemisch die Effektivität des Reinigungsprozesses weiter erhöht.

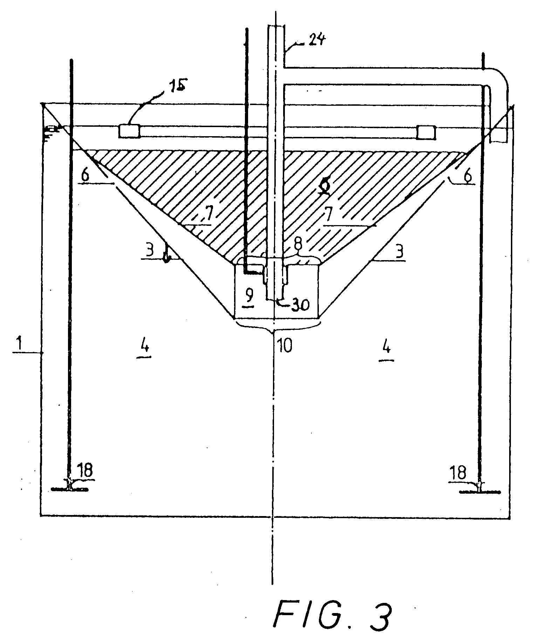

Bei der in Fig. 3 dargestellten Ausführungsform der erfindungsgemäßen Vorrichtung ist im unteren Teil des Separationsraums 5 eine Ansaugöffnung 30 der Pumpe 24 angeordnet, die im vorliegenden Falle eine Mammutpumpe darstellt.

Durch Absaugen eines Teils der Suspension des Belebtschlamms, der vom Separationsraum 5 in den Aktivierungsprozeß zurückkehrt, wird auch eine Intensivierung des Reinigungsprozesses erzielt. Obgleich diese Ausführungsform insbesondere in energetischer Hinsicht etwas weniger günstig ist als die vorstehend beschriebene Lösung, da mehrere Pumpen mit lokaler Wirkung bei der Ausführung mit länglichen Austrittsöffnungen 10 erforderlich sind, ist diese Ausführungsform insbesondere zur Modernisierung und Erhöhung der Leistungsfähigkeit bereits bestehender Reaktoren besonders günstig einsetzbar, die kegelartige bzw. konische Trennwände besitzen und einen konzentrischen, sich nach unten verjüngenden Separationsraum bzw. mehrere solcher Separationsräume aufweisen. Die Pumpe 24 kann vorteilhaft bei erhöhter hydraulischer Belastung in Betrieb gesetzt werden, ggf. automatisch.

Das erfindungsgemäße Verfahren und die erfindungsgemäße Vorrichtungskonzeption führen zu zahlreichen Vorteilen. Einer der wichtigsten Vorteile besteht in der Steigerung der Effektivität der Separationsprozesse bei der Fluidfiltration infolge der Intensivierung der Rückkehr der abgefangenen Suspension des Belebtschlamms zurück in den Aktivierungsprozeß. Diese Effektivitätserhöhung erreicht im Vergleich zu bisher bekannten Systemen der Fluidfiltration 50 bis 100 %.

Die Steigerung der Separationsleistung macht sich in einer generellen Verbesserung der Betriebsparameter entsprechender Reinigungsanlagen bemerkbar, ferner in dem verringerten erforderlichen Fassungsvermögen und dergleichen. Daher hat die erfindungsgemäße Konzeption der erzwungenen Strömung zur schwerkraftbedingten Rückkehr des abgefangenen aktivierten Schlamms allgemein Bedeutung auch bei der Erhöhung der Reinigungsintensität von Anlagen, bei denen die Fluidfiltration zur Separation herangezogen wird.

Neben diesem allgemeinen Vorteil ist das erfindungsgemäße Verfahren, das eine Intensivierung der Fluidfiltration sicherstellt, auch mit weiteren, nicht weniger bedeutenden Vorteilen verbunden, die insbesondere auch bei Einsatz der Fluidfiltration bei spezifischen Vorhaben der Abwasserreinigung ins Gewicht fallen. So ermöglicht z.B. die Anwendung des erfindungsgemäßen Verfahrens der erzwungenen Strömung die Konstruktion horizontaler zylindrischer Reaktoren aufgrund der Beseitigung von toten Zonen im Reaktor und der Verhinderung einer Verschlammung des Eintrittsspalts in das Fluidfilter bei Betriebsunterbrechungen. Hierdurch wird die Konstruktion sehr zuverlässiger Anlagen ermöglicht, insbesondere auch von Anlagen zur Reinigung lokal anfallender Abwässer.

Ein weiterer großer Vorteil der erfindungsgemäßen Verfahrenskonzeption liegt in der Anwendbarkeit auf die komplexe Reinigung von Abwässern, die mit stickstoffhaltigen Stoffen verunreinigt sind und eine Denitrifikation erforderlich machen. Die Intensivierung der Separationsprozesse wirkt sich in diesem Falle nicht nur auf eine Verbesserung der quantitativen Parameter sowie der Betriebszuverlässigkeit aus, sondern trägt auch zu einer Verbesserung der qualitativen Kennwerte durch Beseitigung des unerwünschten Phänomens der Post-Denitrifikation in der Schicht des Fluidfilters durch Ausbildung von oxidativen Bedingungen in dieser Schicht bei.

Aufgrund dieser Vorteile führt die Erfindungskonzeption einerseits zu einer wesentlichen Steigerung der technisch wirtschaftlichen Parameter entsprechender Abwasserreinigungsreaktoren und andererseits zu einer beträchtlichen Erweiterung ihrer Einsatzmöglichkeiten auch auf Fälle, in denen bisher eine breite Anwendung der Fluidfiltration aufgrund der einleitend beschriebenen Nachteile des Stands der Technik nicht möglich war.

## Patentansprüche

1. Verfahren zur biologischen Aktivierreinigung von Abwasser, insbesondere nach dem Belebtschlammverfahren mit Fluidfiltration, bei welchem
- ein Aktivierungsgemisch durch innere Belüftung mit Sauerstoff versorgt und gleichzeitig in Zirkulationsströmungen in einem Aktivierraum (4) versetzt wird,
- ein beruhigter Teilstrom des Aktivierungsgemisches in einen sich nach oben erweiternden Separationsraum (5) durch eine Öffnung (8) am unteren schmalen Ende des Separationsraumes eingeführt wird und
- der agglomerierte Schlamm aus dem Separationsraum (5) durch Schwerkraft in die Aktiviermischung zurückgeführt wird,
**dadurch gekennzeichnet,** daß
- der aus dem Fluidfilter absinkende Belebtschlamm zwangsweise durch eine Saugwirkung in den Aktivierraum (4) oder in einen Reduktionsraum (22) eingeleitet wird und
- eine zwangsweise Zirkulationsströmung zwischen dem Aktivierraum (4) und dem Reduktionsraum (22) erzeugt wird.

2. Verfahren nach Anspruch 1,
dadurch gekennzeichnet,
daß die auf den absinkenden Belebtschlamm einwirkende Saugwirkung und die Zirkulationsströmung zwischen dem Aktivierraum (4) und dem Reduktionsraum (22) von einer in der Verbindungsleitung (23; 25) vorgesehenen Pumpe (24) erzeugt wird.

3. Vorrichtung zur biologischen Aktivierungsreinigung von Abwasser, insbesondere zur Durchführung des Verfahrens nach Anspruch 1 oder 2, bestehend aus
- einem Behälter mit zylindrischem Mantel (1),
- mindestens einem von konischen Trennwänden (3) begrenzten und sich nach oben erweiternden Separationsraum (5) zur Fluidfiltration, der an seinem oberen Ende Ablaufrinnen (15) für das gereinigte Klarwasser und an seinem unteren verjüngten Ende eine Durchtrittsöffnung (8) für das Aktivierungsgemisch und für den aus dem Fluidfilter absinkenden Schlamm aufweist, und
- einem vom Separationsraum (5) getrennten Aktivierraum (4), in dessen unterem Teil Belüftungselemente (18) zur Sauerstoffeinleitung in das Aktiviergemisch und zur Strömungserzeugung angeordnet sind, dadurch gekennzeichnet, daß
- ein Reduktionsraum (22) über eine Zulaufleitung (23) mit eingeschalteter Umwälzpumpe (24) und eine Rücklaufleitung (25) im geschlossenen Kreislauf mit dem Aktivierraum (4) verbunden ist und
- unter der Durchtrittsöffnung (10) des Separationsraumes (5) ein Sammelkegel (31) mit seitlichen Einströmöffnungen (26) vorgesehen ist, dessen Innenraum über die Zulaufleitung (23) mit der Saugseite der Umwälzpumpe (24) verbunden ist.

4. Vorrichtung nach Anspruch 3,
dadurch gekennzeichnet,
daß der im Behälter (1) angeordnete Aktivierraum (4) durch die Trennwände (3) von dem mindestens einen Separationsraum (5) abgetrennt und über die Leitungen (23, 25) und die Pumpe (24) mit dem nebengeordneten Reduktionsraum (22) verbunden ist.

5. Vorrichtung nach einem der Ansprüche 3 und 4,
dadurch gekennzeichnet,
daß mindestens eine Trennwand (3') Öffnungen (6) aufweist und
daß im Separationsraum (5) eine im oberen Teil der Trennwand (3') angebrachte, in Richtung nach unten immer mehr von der Trennwand (3') beabstandete Richtwand (7) vorgesehen ist, welche die Öffnungen (6) überdeckt und deren unteres Ende zusammen mit der anderen Trennwand (3) die Durchtrittsöffnung (8) vorgibt.

6. Vorrichtung nach Anspruch 3,
dadurch gekennzeichnet,
daß der im Behälter (1) angeordnete Reduktionsraum (22) durch die Trennwände (3) von dem Separationsraum (5) abgetrennt und über die Leitungen (23, 25) mit dem nebengeordneten Aktivierraum (4) verbunden ist, wobei eine von der druckseitigen Leitung (23) der Umwälzpumpe (24) abgehende Zweigleitung (27) in einen Verteilerraum (28) ausmündet, dessen Mantel (32) zusammen mit der Trennwand (3) die Durchtrittsöffnung (10) begrenzt.

7. Vorrichtung nach Anspruch 3,
dadurch gekennzeichnet,
daß im unteren Teil des Separationsraums (5) die Ansaugleitung (30) der Pumpe (24) vorgesehen ist, deren Druckseite mit dem Aktivierungsraum (4) verbunden ist.

8. Vorrichtung nach Anspruch 7,
dadurch gekennzeichnet,
daß die Pumpe (24) eine Mammutpumpe ist (Fig. 3).

## Claims

1. A process for the activated biological purification of waste water, more particularly by the activated sludge process with fluid filtration, wherein
- an activation mixture is supplied with oxygen by internal aeration and at the same time circulated in an activating chamber (4),
- a calmed part-flow of the activation mixture is introduced into an upwardly widening separation chamber (5) through an aperture (8) at the bottom narrow end of the separation chamber and
- the agglomerated sludge is recycled from the separation chamber (5) into the activation mixture by gravity,
characterised in that
- the activated sludge sinking from the fluid filter is introduced positively by a suction effect into the activation chamber (4) or into a reduction chamber (22) and
- a positive circulation flow is produced between the activation chamber (4) and the reduction chamber (22).

2. A process according to claim 1, characterised in that the suction effect acting on the sinking activated sludge, and the circulation flow between the activation chamber (4) and the reduction chamber (22), are produced by a pump (24) provided in the connecting line (23; 25).

3. Apparatus for the activated biological purification of waste water, more particularly for performing the process according to claim 1 or 2, consisting of
- a tank with a cylindrical casing (1),
- at least one upwardly widening separation chamber (5) for fluid filtration, said separation chamber being defined by conical partitions (3) and having at its top end discharge channels (15) for the purified clarified water and, at its bottom tapering end, a passage aperture (8) for the activation mixture and for the sludge sinking from the fluid filter, and
- an activation chamber (4) which is separated from the separation chamber (5) and in the bottom part of which there are disposed aeration elements (18) for introduction of oxygen into the activation mixture and for flow production,
characterised in that
- a reduction chamber (22) is connected to the activation chamber (4) in a closed circuit via a feed line (23) incorporating a circulating pump (24) and a return line (25) and
- a collecting cone (31) with lateral inlet apertures (26) is provided beneath the passage aperture (10) of the separation chamber (5) and its interior is connected to the intake side of the circulating pump (24) via the feed line (23).

4. Apparatus according to claim 1, characterised in that the activation chamber (4) in the tank (1) is separated by the partitions (3) from the at least one separation chamber (5) and is connected via the lines (23, 25) and the pump (24) to the secondary reduction chamber (22).

5. Apparatus according to claim 3 or 4, characterised in that at least one partition (3') has apertures (6) and in that the separation chamber (5) contains a baffle wall (7) which is disposed in the top part of the partition (3') with increasing spacing therefrom in the downward direction, and which covers the apertures (6) and the bottom end of which together with the other partition (3) defines the passage aperture (8).

6. Apparatus according to claim 3, characterised in that the reduction chamber (22) in the tank (1) is separated from the separation chamber (5) by the partitions (3) and is connected via the lines (23, 25) to the secondary activation chamber (4), while a branch line (27) extending from the delivery line (23) of the circulating pump (24) leads into a distributor chamber (28), the casing (32) of which together with the partition (3) defines the passage aperture (10).

7. Apparatus according to claim 3, characterised in that the intake line (30) of the pump (24) is provided in the bottom part of the separation chamber (5), the pump delivery side being connected to the activation chamber (4).

8. Apparatus according to claim 7, characterised in that the pump (24) is a mammoth pump (Fig. 3).

## Revendications

1. Procédé pour l'épuration par activation biologique des eaux usées, en particulier selon le procédé des boues activées avec filtration de fluide, procédé dans lequel
- on alimente un mélange d'activation par aérage interne à l'oxygène et on l'ajoute simultanément dans les courants de circulation dans une chambre d'activation (4)
- on introduit un courant partiel calmé du mélange d'activation dans une chambre de séparation (5) s'élargissant vers le haut par une ouverture (8) ménagée sur le petit côté inférieur de la chambre de séparation (5)
- on recycle la boue agglomérée provenant de la chambre de séparation (5) par la force de gravité dans le mélange d'activation,
caractérisé en ce que
- la boue activée précipitant à partir du filtre de fluide est introduite de force par effet d'aspiration dans la chambre d'activation (4) ou dans une chambre de réduction (22) et
- un courant de circulation forcé est produit entre la chambre d'activation (4) et la chambre de réduction (22).

2. Procédé selon la revendication 1, caractérisé en ce que l'effet d'aspiration s'exerçant sur la boue activée en précipitation et le courant de circulation entre la chambre d'activation (4) et la chambre de réduction (22) sont produits par une pompe (24) prévue dans la conduite de liaison (23,25).

3. Dispositif destiné à la purification par activation biologique des eaux usées, en particulier en mettant en oeuvre le procédé selon la revendication 1 ou 2, constitué par
un réservoir avec une enveloppe cylindrique (1),
au moins une chambre de séparation (5) s'élargissant vers le haut et limitée par des parois de séparation coniques (3) pour la filtration de fluide, chambre de séparation qui présente sur son extrémité supérieure des rigoles de déversement ou d'écoulement (15) pour les eaux limpides purifiées et qui présente sur son côté inférieur rétréci une ouverture de passage (8) pour le mélange d'activation et pour la boue en précipitation du filtre de fluide
- une chambre d'activation (4) séparée par une chambre de séparation (5), dans la partie inférieure de laquelle sont disposés des éléments d'aérage (18) pour l'introduction de l'oxygène dans le mélange d'activation et pour la production d'un écoulement, caractérisé en ce que
- une chambre de réduction (22) est reliée à la chambre de d'activation (4) par l'intermédiaire d'une pompe de circulation intercalée (24) et d'une conduite de retour (25) en circuit fermé et
- sous l'ouverture de passage (10) de la chambre de séparation (5) il est prévu un cône collecteur (31) avec des ouvertures d'entrée latérales (26), dont la chambre interne est reliée au côté aspiration de la pompe de circulation (24) par la conduite d'amenée (23).

4. Dispositif selon la revendication 3, caractérisé en ce que la chambre d'activation (4) agencée dans le réservoir (1) est isolée par les parois de séparation (3) d'au moins une chambre de séparation (5) et se trouve en communication par l'intermédiaire des conduites (23,25) et de la pompe (24) avec la chambre de réduction contiguë (22).

5. Dispositif selon l'une des revendications 3 et 4, caractérisé en ce qu'au moins une paroi de séparation (3') présente des ouvertures (6) et en ce que dans la chambre de séparation (5) il est prévu une paroi directrice (7) disposée dans la partie supérieure de la paroi de séparation (3') dont l'espacement croît progressivement par rapport à la paroi de séparation (3') dans la direction vers le bas, paroi directrice qui recouvre les ouvertures (6) et dont l'extrémité inférieure conjointement avec l'autre paroi de séparation (3) définit l'ouverture de passage (8).

6. Dispositif selon la revendication 3, caractérisé en ce que la chambre de réduction (22) disposée dans le réservoir (1) est isolée de la chambre de séparation (5) par les parois de séparation (3) et se trouve en communication avec la chambre d'activation contiguë (4) par les conduites (22,25), une conduite en dérivation (27) partant de la conduite côté pression (23) de la pompe de circulation (24) et débouchant dans une chambre de distributtion (28) dont l'enveloppe (32) conjointement avec la paroi de séparation (3) limite l'ouverture de passage (10).

7. Dispositif selon la revendication 3, caractérisé en ce que la conduite d'aspiration (30) de la pompe (24) est prévue dans la partie inférieure de la chambre de séparation (5) dont le côté pression est raccordée à la chambre d'activation (4).

8. Dispositif selon la revendication 7, caractérisé en ce que la pompe (24) est une pompe mammouth (Fig. 3).
